# EUROPÄISCHE PATENTSCHRIFT

(11) **EP 2 379 296 B1**
(45) Veröffentlichungstag und Bekanntmachung des Hinweises auf die Patenterteilung: **06.03.2013**
(21) Anmeldenummer: 10702587.6
(22) Anmeldetag: 07.01.2010
(51) Int. Cl.: B29C 33/64

(54) **TRENNMITTEL UND DESSEN VERWENDUNG FÜR DIE HERSTELLUNG VON POLYURETHAN-FORMKÖRPERN**
RELEASE AGENT AND THE USE THEREOF FOR PRODUCING POLYURETHANE MOLDINGS
MOYEN DE SÉPARATION ET SON UTILISATION POUR LA FABRICATION DE CORPS MOULÉS EN POLYURÉTHANE

(30) Priorität: 16.01.2009 DE 102009005084; 06.03.2009 DE 102009012074
(43) Veröffentlichungstag der Anmeldung: 26.10.2011
(73) Patentinhaber: Acmos Chemie KG, 28199 Bremen (DE)
(72) Erfinder: KLYSZCZ-NASKO, Holger, 28816 Stuhr (DE); WEIGELT-PETERS, Anke, 28217 Bremen (DE); PROCHNOW, Peter, 28199 Bremen (DE)
(74) Vertreter: Scholz, Volker
(86) Internationale Anmeldenummer: PCT/DE2010/000013
(87) Internationale Veröffentlichungsnummer: WO 2010/081462

(56) Entgegenhaltungen:
- EP-A1- 1 795 322
- DE-A1-102004 018 926
- DE-A1-102004 049 427
- DE-A1-102006 049 673
- US-A- 4 936 917
- US-A- 5 008 103
- US-A1- 2007 037 897

## Beschreibung

Die vorliegende Erfindung betrifft Trennmittel und ihre Verwendung bei der Herstellung von Polyurethan-Formkörpern.

Trennmittel werden überall dort eingesetzt, wo die Adhäsion von Formstoffen gegenüber den Formen, die beispielsweise aus thermisch stark leitfähigen Werkstoffen, wie Metallen, hergestellt sind, so groß ist, dass eine zerstörungsfreie Entnahme des Formteils aus einer Geometrie gebenden Form ohne solche Trennmittel nicht möglich ist. Beispielsweise benötigt man bei der Entformung von Polyurethan-Formkörpern Trennmittel, die auf die mit Polyurethanen und/oder der Polyurethan-Reaktionsmischung in Berührung kommenden Formwandungen aufgebracht werden. Dabei können die für die Entformung notwendigen Trennmittel aus Dispersionen von Wachsen, Seifen, Ölen und Silikonen in Lösungsmitteln, wie Kohlenwasserstoffen oder Wasser, aufgebaut sein. Die Lösungsmittel verdampfen nach Aufbringen des Trennmittels von der Formenoberfläche, und ein dünner Trennfilm bleibt zurück, der die einfache Entnahme des Formteils ermöglicht.

Moderne Trennmittel haben neben der Aufgabe der Trennwirkung weitere Funktionen, die die Oberflächen der Formteile betreffen. Bei entsprechender Auswahl der Rohstoffe können Zelligkeit, Haptik und Glanz des Formkörpers beeinflusst werden.

Insbesondere bei der Modifikation des Glanzes und der Haptik der Teileoberfläche kommt dem Trennmittel eine entscheidende Bedeutung zu. Diese Aufgabe wird, wie aus dem Stand der Technik bekannt, bislang beispielsweise mit einer Kombination verschiedener Wachse und Silikone sowie Hilfsstoffen, die auf Silikaten oder Glimmer basieren, in dem Trennmittelsystem gelöst.

Nachteilig an dem Stand der Technik ist, dass wachshaltige Systeme Rückstände in der Form hinterlassen und während eines Formenzyklus zu starkem Aufbau und damit zu Unterschieden im Glanz und in der Haptik führen. Im Gegensatz hierzu zeigen Systeme auf Silikonbasis zwar eine ausgezeichnete Trennwirkung, führen aber zu hohen Glanzgraden und hinterlassen eine speckige Oberfläche.

In bekannten Trennmittelsystemen werden heute oberflächenaktive Substanzen vom Typ der Silikonpolyglykolether eingesetzt, um die Zelligkeit der Oberfläche der Schaumteile zu regulieren und Oberflächendefekte zu reduzieren, wie es beispielsweise aus der US 4,936,917 bekannt ist. Unter Silikonpolyglykolethem werden alle Silikone verstanden, die als Copolymere aus Silikon, Ethylenoxid und/oder Propylenoxid aufgebaut sind. Gemäß dem aus der US 4,936,917 bekannten Trennmittel werden Silikonpolyglykolether eingesetzt, die einen Trübungspunkt in Wasser zwischen 25 und 50°C aufweisen, um ausreichend aktiv zu sein. Dabei wird gemäß der vorliegenden Erfindung der Trübungspunkt als diejenige Temperatur definiert, bei der eine Lösung (1 g/100 ml demineralisiertes Wasser) trüb wird, das heißt sich der Ether in eine zweite Phase auftrennt. Unterhalb des Trübungspunktes ist der Ether in Wasser in einer molekularen Dispersion, die in Micellen vorliegt, gelöst. In der US 4,936,917 wird angegeben, dass oberflächenaktive Mittel auf Basis eines Silikonpolyglykolethers mit einem hohen Silikonanteil und Wasserunlöslichkeit die Oberflächen zerstören und die Trennwirkung herabsetzen.

Aufgabe der Erfindung ist es, ein Trennmittel bereitzustellen, das die Nachteile des Stands der Technik überwindet und insbesondere nur gering aufbaut, gleichzeitig einen geringen Glanzgrad aufweist und eine angenehme Haptik des Formteils hinterläßt.

Diese Aufgabe wird gelöst durch ein Trennmittel für die Herstellung von Polyurethan-Formkörpern umfassend: zumindest ein Trägermedium ausgewählt aus Wasser und/oder organischen Lösungsmitteln, zumindest einen Silikonpolyglycolether, der in Wasser einen Trübungspunkt von < 20°C aufweist oder in Wasser bei Raumtemperatur unlöslich ist, und optional zumindest eine trennaktive Substanz ausgewählt aus der Gruppe bestehend aus Seifen, Ölen, Wachsen und Silikonen.

Dabei ist vorgesehen, dass das Trennmittel eine wässrige Dispersion ist.

Auch wird vorgeschlagen, dass das organische Lösungsmittel ausgewählt ist aus Alkoholen und aliphatischen Kohlenwasserstoffen.

Ferner ist bevorzugt, dass der Silikonpolyglykolether in Wasser bei Raumtemperatur dispergierbar oder unlöslich ist. Besonders bevorzugt für das erfindungsgemäße Trennmittel ist, dass der eingesetzte Silikonpolyglykolether einen Trübungspunkt von unter 20°C aufweist. Eine Untergrenze des Trübungspunktes kann nur schwerlich angegeben werden, weil die eingesetzten Verbindungen bei Raumtemperatur in Wasser bevorzugt nicht klar löslich, sondern trüb dispergiert sind.

Bevorzugt ist ebenfalls vorgesehen, dass das Trennmittel weitere Komponenten enthält, die ausgewählt sind aus der Gruppe bestehend aus Emulgator(en), Katalysator(en), Schaumstabilisator(en), Viskositätsmodifizierer(n) und Konservierungsstoff(en).

Eine Ausführungsform der Erfindung sieht vor, dass sie umfasst:
0,5-20 Gew.-% Silikonpolyglykolether
0,5-40 Gew.-% trennaktive Substanz(en)
0,1-10 Gew.-% Emulgator(en)
0,1-5 Gew.-% Katalysator(en)
0,1-5 Gew.-% Schaumstabilisator(en)
0,1-5 Gew.-% Viskositätsmodifizierer
0,1-2 Gew.-% Konservierungsstoff(e) und
Ad 100 Gew.-% Wasser.

Bevorzugt kann vorgesehen sein, dass der Silikonpolyglykolether Ethylenoxidgruppen allein oder in Kombination Propylenoxidgruppen enthält.

Eine Ausführungsform zeichnet sich dadurch aus, dass der Silikonpolyglykolether einen Anteil von Dimethylsiloxaneinheiten von mehr als 20 Gew.-% im Molekül enthält.

Bevorzugt ist, dass als trennaktive Substanz flüssige, feste, natürliche oder synthetische Wachse, optional behandelt, chemisch modifiziert oder verseift; Ester von Carbonsäuren mit Alkoholen oder Fettalkoholen; Metallseifen; Öle oder sonstige flüssige Kohlenwasserstoffe; oder Silikone ausgewählt sind.

Auch ist bevorzugt vorgesehen, dass der Emulgator ausgewählt ist aus der Gruppe bestehend aus anionischen, kationischen, zwitterionischen und nicht-ionischen Tensiden.

Schließlich ist es bevorzugt, dass der Silikonpolyglycolether einen Anteil von Dimethylsiloxaneinheiten von nicht mehr als 80 Gew.-%, bevorzugt nicht mehr als 70 Gew.-%, bevorzugt nicht mehr als 60 Gew.-% im Molekül enthält.

Als eine weitere bevorzugte Ausfiihrungsform eines erfindungsgemäßen Trennmittels wurde gefunden, wenn der eingesetzte Silikonpolyglycolether neben dem angegebenen Trübungspunkt bzw. der Wasserunlöslichkeit ferner zumindest eine Trimethylsilylgruppe enthält.

Dabei ist bevorzugt, dass der Silikonpolyglycolether endständig mit Trimethylsilylgruppen geblockt ist.

Eine weitere Aufgabe der Erfindung wird gelöst durch die Verwendung des erfindungsgemäßen Trennmittels zur Herstellung von Polyurethan-Formkörpern.

Überraschenderweise wurde gefunden, dass die erfindungsgemäße wässrige Trennmittel-Dispersion die Oberflächen des gebildeten Formteils hinsichtlich der Haptik und des Glanzgrades positiv beeinflussen, indem der Glanzgrad reduziert und die Haptik weicher wird. Dabei kann erfindungsgemäß auf den Einsatz von Wachsen und Silikonen in diesem Trennmittel teilweise oder ganz verzichtet werden.

Bevorzugt besteht eine wässrige Trennmittel-Dispersion gemäß der vorliegenden Erfindung aus
0,5-40 Gew.-% trennaktive Substanz(en), ausgewählt aus der Gruppe bestehend aus Seifen, Ölen, Wachsen und Silikonen
0,5-20 Gew.-% wasserdispergierbarem Silikonpolyglykolether
0,5-20 Gew.-% Hilfsstoffen und Zusatzstoffen
Ad 100 Gew.-% Lösungsmittel

Erfindungsgemäß ist die Verwendung von Wasser als Trägermedium bevorzugt, da Wasser aus Umweltschutzgründen das ökologisch geringste Gefährdungspotential besitzt. Die Mitverwendung von flüchtigen organischen Substanzen, wie Alkoholen und/oder aliphatischen Kohlenwasserstoffen, ist jedoch nicht ausgeschlossen, da diese Verbindungen durchaus zur besseren Verarbeitung der erfindungsgemäßen Trennmittel beitragen können.

Die erfindungsgemäß eingesetzten Silikonglykolether zeichnen sich insbesondere dadurch aus, dass sie eine gute Löslichkeit im frischen, flüssigen Schaum besitzen und sich in der Grenzfläche des Trennmittels und des Schaums bevorzugt anlagern, ohne Oberflächenstörungen zu verursachen.

Als trennaktive Substanzen sind insbesondere die folgenden bevorzugt:
Wachse, d.h. flüssige, feste, natürliche oder synthetische Wachse, die behandelt, chemisch modifiziert oder verseift wurden; Ester von Carbonsäuren mit Alkoholen oder Fettalkoholen;
Metallseifen, wie Alkali- oder Erdalkalimetallsalze von Fettsäuren, Öle oder sonstige flüssige Kohlenwasserstoffe, wie Weißöle oder Polyalphaolefine; Silikone wie Polydimethylsiloxan, ggf. substituiert mit alphatischen, aromatischen oder aminoaliphatischen Kohlenwasserstoffresten.

Als übliche Hilfs- und Zusatzstoffe können eine oder mehrere Verbindungen aus der folgenden Übersicht eingesetzt werden:

### a) Emulgatoren

Anionische Emulgatoren, wie Alkylethercarboxylate, Alkylsulfate; nicht-ionische Emulgatoren wie ethoxylierte Fettalkohole, ethoxylierte Oxoalkohole und andere Alkoholether, Fettamine wie Dialkylamine, Fettsäurealkanolamide, Fettsäureester mit Alkoholen wie Sorbitolester; kationische Emulgatoren wie sauer gestellte Alkyldialkylamine, quartäre Stickstoffverbindungen; amphotere Tenside, die allesamt in Mengen von 0,1 bis 10 Gew.-%, bevorzugt 0,5 bis 10 Gew.-%, eingesetzt werden können.

### b) Katalysatoren

Typischerweise können solche Katalysatoren verwendet werden, die für die Polyurethanreaktion bekannt sind, beispielsweise Lewis-Säuren oder Lewis-Basen, wie tertiäre Amine.

### c) Schaumstabilisatoren

Als Schaumstabilisatoren können die für die Polyurethanchemie üblichen und bekannten Schaumstabilisatoren verwendet werden.

### d) Viskositätsmodifizierer

Als Viskositätsmodifizierer können beispielsweise Verdickungsmittel wie Cellulosederivate oder Xanthan eingesetzt werden.

### e) Konservierungsstoffe

Übliche Konservierungsstoffe wie Bakterizide, Fungizide, Algizide oder Antioxidantien können verwendet werden.

Die erfindungsgemäßen Trennmittel können nach aus dem Stand der Technik bekannten Verfahren hergestellt werden. Bevorzugt wird dabei folgendes Verfahren angewendet:

Die trennaktiven Substanzen werden mit einem Emulgator geschmolzen in einem Behälter vorgelegt. Das Lösungsmittel, wie beispielsweise Wasser, wird unter Zuhilfenahme von Dispergierungswerkzeugen, wie dem Ultraturrax® der Firma Jahnke & Kunkel, eingetragen und dispergiert. Alle wassermischbaren Komponenten werden in einem Anteil Wasser vorgelöst und in die abgekühlte Dispersion eingerührt. Wasserunlösliche Additive werden mit den trennaktiven Substanzen in der festen Phase in das System eingeführt.

Weitere Merkmale und Vorteile des erfindungsgemäßen Trennmittels ergeben sich aus der folgenden detaillierten Beschreibung von Ausführungsbeispielen. In den Ausführungsbeispielen wurden die folgenden Substanzen verwendet:
Wacker TPR^{®}: trennendes Silikon, Hersteller Wacker Chemie
Atlas G1300^{®}: Polyoxoethylenglyceridester, Hersteller Croda
Renex 36^{®}: Polyoxoethylen(6)tridecylalkohol, Hersteller Croda
Polywax 655^{®}: Wachs, Hersteller Petrolite
Unithox 450®: Fettalkoholethoxylat (50EO), Hersteller Petrolite
Exxon D60^{®}: flüchtiger Kohlenwasserstoff, Hersteller Exxon Chemicals
Tegopren 5830^{®}, Tegopren 5831^{®}: Silikonpolyglykolether, Hersteller Evonik
Silwet L7001®, Silwet L7220^{®}, Silwet L7030^{®}: Silikonpolyglykolether, Hersteller Momentive Performance Materials
DC-Fluid 190^{®}; DC Fluid 193^{®}, DC Fluid 198^{®} ; DC Fluid 1248^{®} : Silikonpolyglykolether, Hersteller Dow Corning

Für die Ausführungsbeispiele wurde eine Dispersion trennaktiver Substanzen erstellt, der die oben angegebenen verschiedenen Silikonpolyglykolether zugesetzt wurden.

Dabei wurden zunächst die folgenden Beispielrezepturen hergestellt:

### Beispielrezeptur 1

3% Wacker TPR^{®}
0,5% Atlas G1300^{®}
0,2% Renex 36^{®}
97,3% Wasser

### Beispielrezeptur 2

2% Polywax 655^{®}
1% Unithox 450^{®}
2% Exxon D60^{®}
95,0% Wasser

Alle Prozentangaben sind, sofern nicht ausdrücklich anderweitig bezeichnet, Angaben in Gewichtsprozent.

Den Beispielrezepturen 1 und 2 wurden die folgenden Silikonpolyglykolether zugesetzt:
1) Tegopren 5830^{®}; 2) Tegopren 5831^{®}; 3) Silwet L7001^{®}; 4) Silwet L7220^{®}; 5) Silwet L7030^{®}; 6) DC-Fluid 190^{®}; 7) DC-Fluid 193^{®}; 8) DC-Fluid 198^{®}; 9)DC Fluid 1248^{®}

Insbesondere Tegopren 5830® und Tegopren 5831® enthalten zumindest eine Trimethylsilylgruppe, die an der Silikonkette angebunden ist.

Die Beispielrezeptur 1) wurde mit jeweils 2 Gew.-% der Additive 1-8 versetzt, wenn sie als wasserlöslich beschrieben sind, oder mit den trennaktiven Substanzen aufgeschmolzen, wenn sie als wasserunlöslich beschrieben sind. Ihre Fähigkeit, Polyurethanformkörper zu entformen, wurde überprüft. Aus Polyurethan hergestellte Prüfplatten wurden bezüglich ihres Erscheinungsbildes, wie Optik (Glanz) und Haptik (Touch), bewertet.

Die Beispielrezeptur 2) wurde in einem Verhältnis von 1:1 mit der Beispielrezeptur 1) gemischt und mit jeweils 2 Gew.-% der Additive 1-8 versetzt, wenn sie als wasserlöslich beschrieben sind, oder mit den trennaktiven Substanzen aufgeschmolzen, wenn sie als wasserunlöslich beschrieben sind. Wiederum wurde ihre Fähigkeit, Polyurethanformkörper zu entformen, überprüft. Die hergestellten Prüfplatten wurden bezüglich ihres Erscheinungsbilds, wie Optik (Glanz) und Haptik (Touch), bewertet.

Für die Herstellung der Prüfplatten wurde das Trennmittel mit einer handelsüblichen Sprühpistole in eine 30 x 30 cm große Probenform, die auf etwa 60°C vorgewärmt wurde, gesprüht. Der Trennfilm wurde 2 Minuten getrocknet. Anschließend wurde die Form mit handelsüblich erhältlichem Polyether-PU-Schaum, wie er zur Herstellung von integralen Formschäumen verwendet wird, gefüllt. Hierzu wurden die beiden Schaumkomponenten entsprechend der Herstellerangaben mit einem schnellen Aufrührer gemischt und in die Form gebracht. Die Form wurde verschlossen und der Schaum gemäß der Herstellerangaben gehärtet. Für die Versuche wurden Elastofoam I 4510/133 und ISO 134/16 verwendet.

Die folgende Tabelle 1 zeigt einen Überblick über die Versuchsergebnisse für die Beispielrezeptur 1.

**Tabelle 1**

| | | | | Eigenschaften der Additive | | |
|---|---|---|---|---|---|---|
| Probe | Trennwirkung | Glanz | Touch | Trüpkt Lt.Herst | Dimethylsiloxananteil lt. Herst. (Gew.-%) | Wasserlöslichkeit 1% in demineralis. Wasser bei Raumtemperatur |
| 0 | ++ | O | - | | | |
| 1 | + | ++ | ++ | < 20°C | 21 | Opal dispergierbar |
| 2 | ++ | + | ++ | entfällt | 31 | Nicht löslich |
| 3 | - | ++ | + | 38 °C | 43 | wasserlöslich |
| 4 | + | ++ | + | < 20°C | 24 | Opal dispergierbar |
| 5 | - | + | + | 32°C | 43 | wasserlöslich |
| 6 | - | + | + | 37°C | 18 | wasserlöslich |
| 7 | - | + | + | 78°C | 28 | wasserlöslich |
| 8 | - | + | + | 37°C | < 20 | wasserlöslich |
| 9 | - | + | + | Entfällt | 87 | Nicht löslich |

### Bewertung:

Trennwirkung (++): Formteil liegt lose in Form; (+): Formteil lässt sich mit geringem Kraftaufwand entformen; (o): Formteil lässt sich zerstörungsfrei mit Kraftaufwand entformen; (-): Formteil lässt sich mit Einrissen entformen; (--): Formteil lässt sich nicht entformen
Glanz: (++) matte Oberfläche (Glanzgrad < 2.0, 60°); +: seidenmatte Oberfläche (Glanzgrad 2.0 - 3.0, 60°); (o): leichtglänzende Oberflächen ( Glanzgrad > 3.0-5.0);
Touch: (++): trocken, softartig; (+): trocken, glatt; (o): stumpf; (-): schmierig

Die Probe 0 stellt dabei ein Trennmittel ohne Zusatz des Silikonpolyglykolethers dar. Die Proben 2 und 9 weisen keinen Trübungspunkt auf, da diese Proben in Wasser nicht dispergierbar, sondern unlöslich sind.

Die folgende Tabelle 2 zeigt einen Überblick über die Versuchsergebnisse der in einem Verhältnis von 1:1 1 gemischten Beispielrezepturen 1 und 2.

**Tabelle 2**

| | | | | Eigenschaften der Additive | | |
|---|---|---|---|---|---|---|
| Probe | Trennwirkung | Glanz | Touch | Trüpkt Lt.Herst | Dimethylsiloxananteil lt. Herst. (Gew._%) | Wasserlöslichkeit 1% in demineralis. Wasser bei Raumtemperatur |
| 0 | ++ | O | O | | | |
| 1 | + | ++ | ++ | < 20°C | 21 | Opal dispergierbar |
| 2 | ++ | + | ++ | entfällt | 31 | Nicht löslich |
| 3 | - | ++ | + | 38°C | 43 | wasserlöslich |
| 4 | + | ++ | + | < 20°C | 24 | Opal dispergierbar |
| 5 | - | + | + | 32°C | 43 | wasserlöslich |
| 6 | - | + | + | 37°C | 18 | wasserlöslich |
| 7 | - | + | + | 78°C | 28 | wasserlöslich |
| 8 | - | + | + | 37°C | < 20 | wasserlöslich |
| 9 | - | + | + | Entfällt | 87 | Nicht löslich |

### Bewertung:

Trennwirkung (++): Formteil liegt lose in Form; (+): Formteil lässt sich mit geringem Kraftaufwand entformen; (o): Formteil lässt sich zerstörungsfrei mit Kraftaufwand entformen; (-): Formteil lässt sich mit Einrissen entformen; (--): Formteil lässt sich nicht entformen
Glanz: (++) matte Oberfläche (Glanzgrad < 2.0, 60°); +: seidenmatte Oberfläche (Glanzgrad 2.0 - 3.0, 60°); (o): leichtglänzende Oberflächen (Glanzgrad > 3.0-5.0);
Touch: (++): trocken, softartig; (+): trocken, glatt; (o): stumpf; (-): schmierig

Wiederum zeigt Probe 0 eine Mischung der Beispielrezepturen 1 und 2 ohne Zusatz von Silikonpolyglykolether.

Wie sich aus den Tabellen 1 und 2 in eindrucksvoller Weise erkennen lässt, zeigen die erfindungsgemäßen Trennmittel die besten Eigenschaftskombinationen bezüglich Trennwirkung, Glanz und Touch. Wesentliches Merkmal der erfindungsgemäßen Trennmittel ist, dass Silikonpolyglykolether mit einem Trübungspunkt von < 20°C eingesetzt werden.

## Patentansprüche

1. Trennmittel für die Herstellung von Polyurethan-Formkörpern umfassend:
- zumindest ein Trägermedium ausgewählt aus Wasser und/oder organischen Lösungsmitteln,
- zumindest einen Silikonpolyglycolether, der in Wasser einen Trübungspunkt von < 20°C aufweist oder in Wasser bei Raumtemperatur unlöslich ist, und
- optional zumindest eine trennaktive Substanz ausgewählt aus der Gruppe bestehend aus Seifen, Ölen, Wachsen und Silikonen.

2. Trennmittel nach Anspruch 1, **dadurch gekennzeichnet, dass** das Trennmittel eine wässrige Dispersion ist.

3. Trennmittel nach Anspruch 1 oder 2, **dadurch gekennzeichnet, dass** das organische Lösungsmittel ausgewählt ist aus Alkoholen und aliphatischen Kohlenwasserstoffen.

4. Trennmittel nach einem der vorangehenden Ansprüche, **dadurch gekennzeichnet, dass** der Silikonpolyglycolether in Wasser bei Raumtemperatur dispergierbar oder unlöslich ist.

5. Trennmittel nach einem der vorangehenden Ansprüche, **dadurch gekennzeichnet, dass** es weitere Komponenten enthält, die ausgewählt sind aus der Gruppe bestehend aus Emulgator(en), Katalysator(en), Schaumstabilisator(en), Viskositätsmodifizierer(n) und Konservierungsstoff(en).

6. Trennmittel nach einem der vorangehenden Ansprüche, **dadurch gekennzeichnet, dass** es umfasst:
0,5-20 Gew.-% Silikonpolyglycolether
0,5-40 Gew.-% trennaktive Substanz(en)
0,1-10 Gew.-% Emulgator(en)
0,1-5 Gew.-% Katalysator(en)
0,1-5 Gew.-% Schaumstabilisator(en)
0,1-5 Gew.-% Viskositätsmodifizierer
0,1-2 Gew.-% Konservierungsstoff(e) und
Ad 100 Gew.-% Wasser.

7. Trennmittel nach einem der vorangehenden Ansprüche, **dadurch gekennzeichnet, dass** der Silikonpolyglycolether Ethylenoxidgruppen allein oder in Kombination mit Propylenoxidgruppen enthält.

8. Trennmittel nach einem der vorangehenden Ansprüche, **dadurch gekennzeichnet, dass** der Silikonpolyglycolether einen Anteil von Dimethylsiloxaneinheiten von mehr als 20 Gew.-% im Molekül enthält.

9. Trennmittel nach einem der vorangehenden Ansprüche, **dadurch gekennzeichnet, dass** als trennaktive Substanz flüssige, feste, natürliche oder synthetische Wachse, optional behandelt, chemisch modifiziert oder verseift; Ester von Carbonsäuren mit Alkoholen oder Fettalkoholen; Metallseifen; Öle oder sonstige flüssige Kohlenwasserstoffe; oder Silikone ausgewählt sind.

10. Trennmittel nach einem der vorangehenden Ansprüche, **dadurch gekennzeichnet, dass** der Emulgator ausgewählt ist aus der Gruppe bestehend aus anionischen, kationischen, zwitterionischen und nicht-ionischen Tensiden.

11. Trennmittel nach einem der vorangehenden Ansprüche, **dadurch gekennzeichnet, dass** der Silikonpolyglycolether einen Anteil von Dimethylsiloxaneinheiten von nicht mehr als 80 Gew.-% im Molekül enthält.

12. Trennmittel nach einem der vorangehenden Ansprüche, **dadurch gekennzeichnet, dass** der Silikonpolyglycolether zumindest eine Trimethylsilylgruppe enthält.

13. Trennmittel nach Anspruch 12, **dadurch gekennzeichnet, dass** der Silikonpolyglycolether endständig mit Trimethylsilylgruppen geblockt ist.

14. Verwendung des Trennmittels gemäß den Ansprüchen 1 bis 13 zur Herstellung von Polyurethan-Formkörpern.

## Claims

1. Release agent for producing polyurethane mouldings comprising:
- at least one carrier medium selected from water and / or organic solvents,
- at least one silicone polyglycol ether which has a cloud point of <20°C in water or is insoluble in water at room temperature, and
- optionally at least one separation-promoting substance selected from the group consisting of soaps, oils, waxes and silicones.

2. Release agent according to claim 1 **characterised in that** the release agent is an aqueous dispersion.

3. Release agent according to claim 1 or 2 **characterised in that** the organic solvent is selected from alcohols and aliphatic hydrocarbons.

4. Release agent according to one of the previous claims **characterised in that** the silicone polyglycol ether is dispersible or insoluble in water at room temperature.

5. Release agent according to one of the previous claims **characterised in that** it contains additional components which are selected from the group consisting of emulsifier(s), catalyst(s), foam-stabiliser(s), viscosity modifier(s) and preservative(s).

6. Release agent according to one of the previous claims **characterised in that** it contains:
0.5-20% by weight silicone polyglycol ether
0.5-40% by weight separation-promoting substance(s)
0.1-10% by weight emulsifier(s)
0.1-5% by weight catalyser(s)
0.1-5% by weight foam stabiliser(s)
0.1-5% by weight viscosity modifier(s)
0.1-2% by weight preservative(s) and
Made up to 100% by weight with water.

7. Release agent according to one of the previous claims **characterised in that** the silicone polyglycol ether contains ethylene oxide groups alone or in combination with propylene oxide groups.

8. Release agent according to one of the previous claims **characterised in that** the silicone polyglycol ether contains a proportion of dimethylsiloxane units of more than 20% by weight in the molecule.

9. Release agent according to one of the previous claims **characterised in that**, as the separation-promoting substance, liquid, solid, natural or synthetic waxes, optionally treated, chemically modified or saponified; esters of carbonic acids with alcohols or fatty alcohols; metal soaps; oils or other liquid hydrocarbons; or silicones are selected.

10. Release agent according to one of the previous claims **characterised in that** the emulsifier is selected from the group consisting of anionic, cationic, zwitterionic and non-ionic surfactants.

11. Release agent according to one of the previous claims **characterised in that** the silicone polyglycol ether contains a proportion of dimethylsiloxane units of not more than 80% by weight in the molecule.

12. Release agent according to one of the previous claims **characterised in that** the silicone polyglycol ether contains at least one trimethylsilyl group.

13. Release agent according to claim 12 **characterised in that** the silicone polyglycol ether is terminally blocked with trimethylsilyl groups.

14. Use of the release agent according to claims 1 to 13 for producing polyurethane mouldings.

## Revendications

1. Moyen de séparation pour la fabrication de corps moulés en polyuréthane comprenant :
- au moins un milieu support choisi parmi l'eau et/ou des solvants organiques,
- au moins un éther de polyglycol siliconé qui présente un point de trouble < à 20 °C dans l'eau ou qui est insoluble dans l'eau à la température ambiante, et
- en option, au moins une substance de séparation choisie dans le groupe constitué par des savons, des huiles, des cires et des silicones.

2. Moyen de séparation selon la revendication 1 **caractérisé en ce que** le moyen de séparation est une dispersion aqueuse.

3. Moyen de séparation selon les revendications 1 ou 2 **caractérisé en ce que** le solvant organique est choisi parmi des alcools et des hydrocarbures aliphatiques.

4. Moyen de séparation selon l'une des revendications précédentes **caractérisé en ce que** l'éther de polyglycol siliconé peut être dispersé ou est insoluble dans l'eau à la température ambiante.

5. Moyen de séparation selon l'une des revendications précédentes **caractérisé en ce qu'**il contient d'autres composants qui sont choisis dans le groupe constitué d'un émulgateur (d'émulgateurs), d'un stabilisant(de stabilisants) de la mousse, d'un agent (d'agents) modifiant de viscosité et d'un produit (de produits) de conservation.

6. Moyen de séparation selon l'une des revendications précédentes **caractérisé en ce qu'**il comprend :
0,5-20 % en poids d'éther de polyglycol siliconé
0,5-40 % en poids de substance(s) de séparation
0,1-10 % en poids d'émulgateur(s)
0,1-5 % en poids de catalyseur(s)
0,1-5 % en poids de stabilisant(s) de la mousse
0,1-5 % en poids d'agent(s) modifiant la viscosité
0,1-2 % en poids de produit(s) de conservation et
Le complément à 100 % en poids avec de l'eau.

7. Moyen de séparation selon l'une des revendications précédentes **caractérisé en ce que** l'éther de polyglycol siliconé contient des groupes oxyde d'éthylène seuls ou en combinaison avec des groupes oxyde de propylène.

8. Moyen de séparation selon l'une des revendications précédentes **caractérisé en ce que** l'éther de polyglycol siliconé contient une proportion d'unités diméthylsiloxane de plus de 20 % en poids dans la molécule.

9. Moyen de séparation selon l'une des revendications précédentes **caractérisé en ce qu'**en tant que substances de séparation sont choisis des cires liquides, solides, naturelles ou synthétiques, éventuellement traitées, modifiées chimiquement ou saponifiées ; des esters d'acides carboxyliques avec des alcools ou des alcools gras ; des savons métalliques ; des huiles ou d'autres hydrocarbures liquides ; ou des silicones.

10. Moyen de séparation selon l'une des revendications précédentes **caractérisé en ce que** l'émulgateur est choisi dans le groupe constitué de tensioactifs anioniques, cationiques, zwitterioniques et non-ioniques.

11. Moyen de séparation selon l'une des revendications précédentes **caractérisé en ce que** l'éther de polyglycol siliconé contient une proportion d'unités diméthylsiloxane de moins de 80 % en poids par molécule.

12. Moyen de séparation selon l'une des revendications précédentes **caractérisé en ce que** l'éther de polyglycol siliconé contient au moins un groupe triméthylsilyle.

13. Moyen de séparation selon la revendication 12 **caractérisé en ce que** l'éther de polyglycol siliconé est bloqué à son extrémité par des groupes triméthylsilyles.

14. Utilisation du moyen de séparation selon les revendications 1 à 13 pour la fabrication de corps moulés en polyuréthane.
